# EUROPEAN PATENT SPECIFICATION

(11) **EP 3 584 422 B1**
(45) Date of publication and mention of the grant of the patent: **12.05.2021**
(21) Application number: 18776761.1
(22) Date of filing: 27.02.2018
(51) Int. Cl.: F02B 23/08, F02B 31/08, F02F 1/42, F02F 3/26, F02B 23/10, F02B 75/12

(54) **SPARK-IGNITION INTERNAL COMBUSTION ENGINE**
OTTOMOTOR
MOTEUR À COMBUSTION INTERNE À ALLUMAGE PAR ÉTINCELLE

(30) Priority: 27.03.2017 JP 2017060660
(43) Date of publication of application: 25.12.2019
(73) Proprietor: Mazda Motor Corporation, Aki-gun, Hiroshima 730-8670 (JP)
(72) Inventor: AOKI, Shuma, Aki-gun Hiroshima 730-8670 (JP); MURANAKA, Hiroaki, Aki-gun Hiroshima 730-8670 (JP); YAMAGUCHI, Naohiro, Aki-gun Hiroshima 730-8670 (JP); WADA, Yoshitaka, Aki-gun Hiroshima 730-8670 (JP)
(74) Representative: Müller-Boré & Partner Patentanwälte PartG mbB
(86) International application number: PCT/JP2018/007293
(87) International publication number: WO 2018/180133

(56) References cited:
- JP-A- H0 979 038
- JP-A- H0 979 038
- JP-A- 2000 045 778
- JP-A- 2000 045 778
- JP-A- 2002 295 260
- JP-A- 2016 118 169
- US-A- 6 129 070

## Description

### TECHNICAL FIELD

The present invention relates to a spark-ignition internal combustion engine, and more particularly to a spark-ignition internal combustion engine in which a protrusion is formed on a top surface of a piston, and a cavity is formed in the protrusion at a position associated with a spark plug.

### BACKGROUND ART

In a spark-ignition internal combustion engine having a pent-roof combustion chamber, which is mounted in a vehicle such as an automobile, it is known that a protrusion is formed on a top surface of a piston in order to increase a geometric compression ratio, and a downwardly recessed cavity is formed in a middle of the protrusion and in a position associated with a spark plug. In an internal combustion of this type, it is possible to retard a timing at which an initial flame front interferes with a top surface of a piston after ignition by a spark plug. Thus, flame propagation is increased, and fuel efficiency is increased.

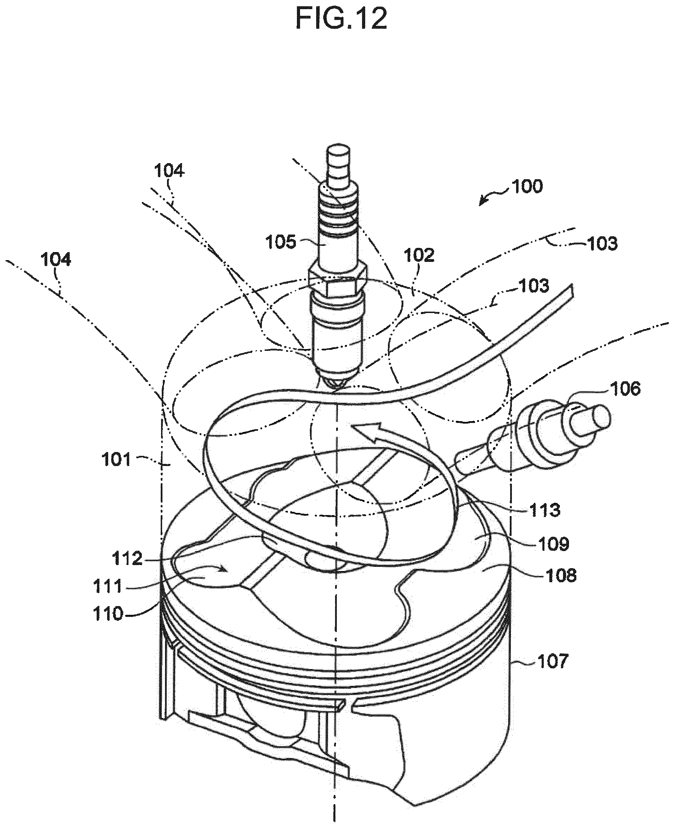

For example, Patent Literature 1 discloses a spark-ignition internal combustion engine as illustrated in FIG. 12. An internal combustion engine 100 illustrated in FIG. 12 includes a pent-roof combustion chamber 101, an intake port 103 and an exhaust port 104 formed in a cylinder head which defines a ceiling surface 102 of the combustion chamber 101, and a spark plug 105 and a fuel injection valve 106 mounted in the cylinder head. The spark plug 105 is disposed on a middle portion of the ceiling surface 102 (between the intake port 103 and the exhaust port 104). The fuel injection valve 106 is disposed at a position offset on an intake side with respect to the middle portion of the ceiling surface 102.

In the internal combustion engine 100 of Patent Literature 1, a protrusion 111 including an intake-side inclined surface 109 and an exhaust-side inclined surface 110 along the ceiling surface 102 of the combustion chamber 101 is formed on a top surface 108 of a piston 107 which defines a bottom surface of the combustion chamber 101. A downwardly recessed cavity 112 is formed in a middle of the protrusion 111 and in a position associated with the spark plug 105. Thus, it is reported that flame propagation is increased and fuel efficiency is increased, while keeping a geometric compression ratio to 13 or larger.

In a spark-ignition internal combustion engine, a so-called tumble port capable of generating a tumble flow (vertical vortex) within a combustion chamber may be employed as an intake port. In a spark-ignition internal combustion engine employing a tumble port, combustion is promoted by turbulence, which is generated by collapse of a tumble flow, as a piston approaches a compression top dead center (in other words, as a combustion chamber is reduced). Thus, fuel efficiency is increased. As illustrated by an arrow 113 in FIG. 12, after flowing downwardly and toward an exhaust side from the intake port 103, a tumble flow has its direction changed along an inner peripheral surface of a cylinder, and flows from the exhaust side toward the intake side along the top surface 108 of the piston 107. Further, after having its direction changed along the inner peripheral surface of the cylinder and flowing upwardly on the intake side, the tumble flow flows from the intake side toward the exhaust side along the ceiling surface 102 of the combustion chamber.

However, in a spark-ignition internal combustion engine employing a piston including a protrusion and a cavity as described in Patent Literature 1, there is a problem that, when a tumble flow flows from an exhaust side toward an intake side along a top surface of the piston, the tumble flow is likely to be decelerated by presence of a protrusion. A deceleration in tumble flow reduces turbulence energy, which is generated by collapse of a tumble flow, and reduces an effect of promoting combustion. This is not preferable in terms of fuel efficiency.

### CITATION LIST

### PATENT LITERATURE

Patent Literature 1: Japanese Unexamined Patent Application Publication No. 2010-14081

JP H09 79038 A discloses that a cylinder injection type internal combustion engine is provided with a combustion chamber, an intake valve and an exhaust valve disposed at the combustion chamber, and a fuel injection valve for injecting fuel directly into the combustion chamber.

US 6 129 070 A discloses a piston for a cylinder direct injection spark ignition internal combustion engine mounted on an automotive vehicle. The piston comprises a piston head including a protruded section which is protruded from a standard horizontal plane which is perpendicular to a center axis of the piston.

### SUMMARY OF INVENTION

In view of the above, an object of the present invention is to suppress, in a spark-ignition internal combustion engine in which a protrusion is formed on a top surface of a piston, and a cavity is formed in the protrusion at a position associated with a spark plug, an operation that a tumble flow is decelerated on the top surface of the piston to thereby increase fuel efficiency.

A spark-ignition internal combustion engine according to the present invention is defined in claim 1.

### BRIEF DESCRIPTION OF DRAWINGS

FIG. 1 is a schematic diagram illustrating a configuration of a spark-ignition internal combustion engine according to a first embodiment of the present invention.
FIG. 2 is a perspective view illustrating a piston, a fuel injection valve, and a spark plug of the internal combustion engine.
FIG. 3 is a perspective view illustrating a distal end surface of the fuel injection valve.
FIG. 4 is a time chart illustrating a timing of fuel injection.
FIG. 5 is an explanatory diagram for describing how fuel to be injected from the fuel injection valve is sprayed.
FIG. 6 is a perspective view of the piston.
FIG. 7 is a plan view of the piston.
FIG. 8 is a cross-sectional view of the piston taken along the line Y8-Y8 in FIG. 7.
FIG. 9 is a cross-sectional view of the piston taken along the line Y9-Y9 in FIG. 7.
FIG. 10 is an explanatory diagram for describing a shape of a cavity formed in a protrusion.
FIG. 11 is a graph illustrating a relationship between an inclination angle of an exhaust-side inclined surface of the protrusion and a combustion period.
FIG. 12 is a diagram illustrating a conventional spark-ignition internal combustion engine.

### DESCRIPTION OF EMBODIMENTS

In the following, embodiments of the present invention are described in detail with reference to the accompanying drawings.

### [First Embodiment]

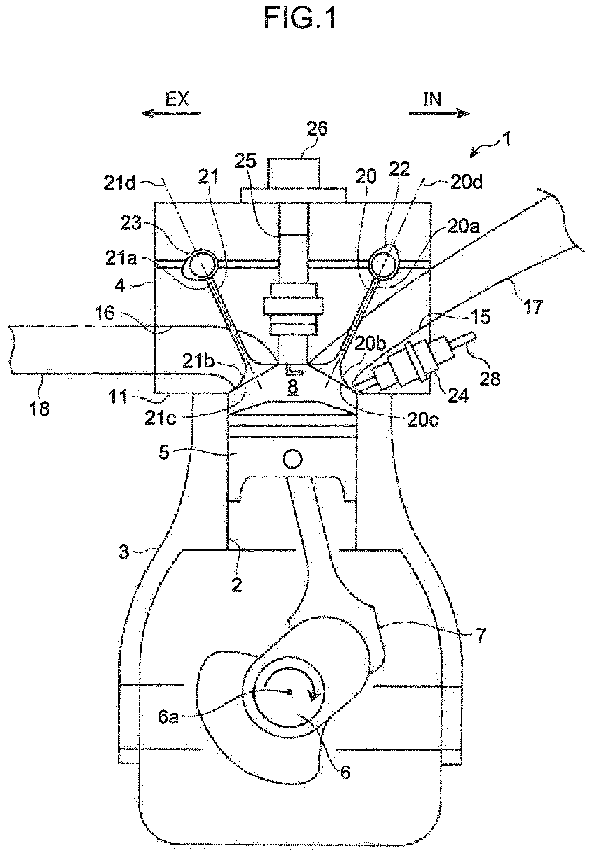

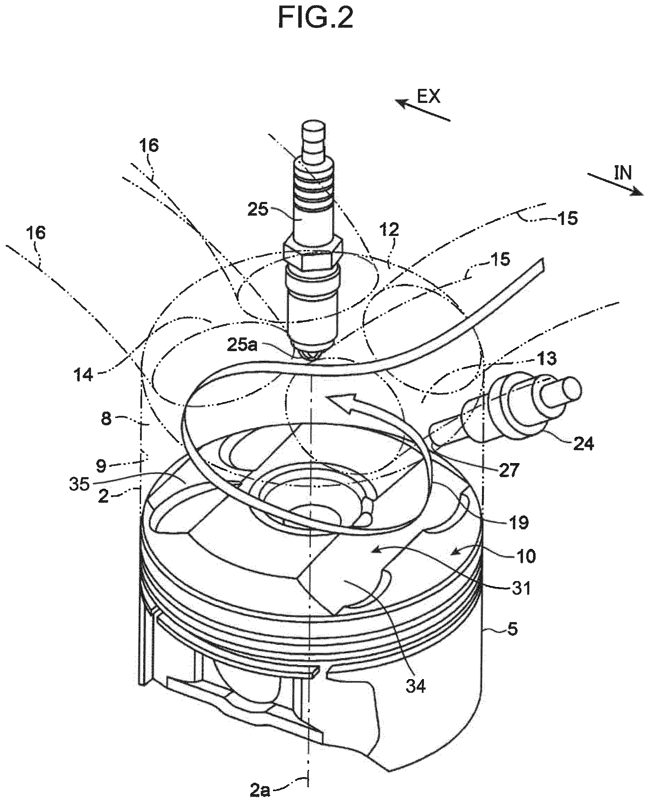

FIG. 1 is a schematic diagram illustrating a configuration of a spark-ignition internal combustion engine according to an embodiment of the present invention. FIG. 2 is a perspective view illustrating a piston, a fuel injection valve, and a spark plug of the internal combustion engine. As illustrated in FIGS. 1 and 2, an engine 1 as the spark-ignition internal combustion engine according to the embodiment of the present invention is a multi-cylinder gasoline engine in which a plurality of cylinders 2 are disposed in an array, and is mounted in a vehicle such as an automobile. The engine 1 is internally provided with a cylinder block 3 in which the cylinders 2 are formed, and a cylinder head 4 disposed above the cylinder block 3 in such a way as to close the cylinders 2 from above. In FIGS. 1 and 2, "IN" denotes an intake side, and "EX" denotes an exhaust side (the same definition is also applied to the other drawings).

A piston 5 is disposed to be reciprocatively movable within the cylinder 2. The piston 5 is connected to a crankshaft 6 which is rotatably supported on a lower portion of the cylinder block 3 via a connection rod 7, and is configured in such a way that reciprocal motion of the piston 5 is converted into rotational motion of the crankshaft 6.

A pent-roof combustion chamber 8 surrounded by an inner peripheral surface 9 of the cylinder 2, a top surface 10 of the piston 5, and a lower surface 11 of the cylinder head 4 is formed above the piston 5. A ceiling surface 12 included in the lower surface 11 of the cylinder head 4 and serving as a portion for covering the combustion chamber 8 is formed into a pent-roof shape (triangular roof shape), and includes an intake-side inclined surface 13 and an exhaust-side inclined surface 14 respectively inclined on an intake side and an exhaust side. The intake-side inclined surface 13 is formed in such a way that an angle thereof with respect to an orthogonal plane orthogonal to a center axis 2a of the cylinder 2 is 23 degrees. The exhaust-side inclined surface 14 is formed in such a way that an angle thereof with respect to an orthogonal plane orthogonal to the center axis 2a of the cylinder 2 is 22 degrees.

An intake port 15 and an exhaust port 16 respectively opened in the intake-side inclined surface 13 and the exhaust-side inclined surface 14 of the ceiling surface 12 are formed in the cylinder head 4. Two intake ports 15 and two exhaust ports 16 are formed for each of the cylinders 2. The two intake ports 15 and the two exhaust ports 16 are respectively formed to be away from each other in a direction orthogonal to the center axis 2a of the cylinder 2 (axis direction of the crankshaft 6).

An intake passage 17 for supplying air into the combustion chamber 8 is connected to the intake port 15. An exhaust passage 18 for discharging combusted gas (exhaust gas) from the combustion chamber 8 is connected to the exhaust port 16. A catalytic device (not illustrated) including a catalyst for purifying exhaust gas is interposed in the exhaust passage 18.

The intake port 15 is opened in the ceiling surface 12 of the combustion chamber 8 in a state that the intake port 15 extends linearly from the combustion chamber 8 obliquely upwardly in such a way as to generate a tumble flow within the combustion chamber 8. A tumble flow illustrated by an arrow 19 in FIG. 2 is generated within the combustion chamber 8, accompanied by introduction of intake air from the intake port 15. After flowing from the intake port 15 downwardly and toward the exhaust side, the tumble flow has its direction changed along the inner peripheral surface 9 of the cylinder 2, and flows from the exhaust side toward the intake side along the top surface 10 of the piston 5. Further, after having its direction changed along the inner peripheral surface 9 of the cylinder 2, and flowing upwardly on the intake side, the tumble flow flows from the intake side toward the exhaust side along the ceiling surface 12 of the combustion chamber 8.

An intake valve 20 and an exhaust valve 21 for respectively opening and closing the intake port 15 and the exhaust port 16 are disposed in the cylinder 4. The intake valve 20 is driven by an intake camshaft 22 which is cooperatively connected to the crankshaft 6, and opens and closes the intake port 15 at a predetermined timing in such a way as to introduce air into the combustion chamber 8 during an intake stroke. The exhaust valve 21 is driven by an exhaust camshaft 23 which is cooperatively connected to the crankshaft 6, and opens and closes the exhaust port 16 at a predetermined timing in such a way as to discharge exhaust gas from the combustion chamber 8 during an exhaust stroke.

An unillustrated variable valve mechanism is provided in the cylinder 4. The variable valve mechanism changes a timing at which the intake valve 20 and the exhaust valve 21 open and close the intake port 15 and the exhaust port 16. The variable valve mechanism may open both of the intake valve 20 and the exhaust valve 21 during an exhaust stroke. This is for discharging residual exhaust gas by using intake air from the intake port 15.

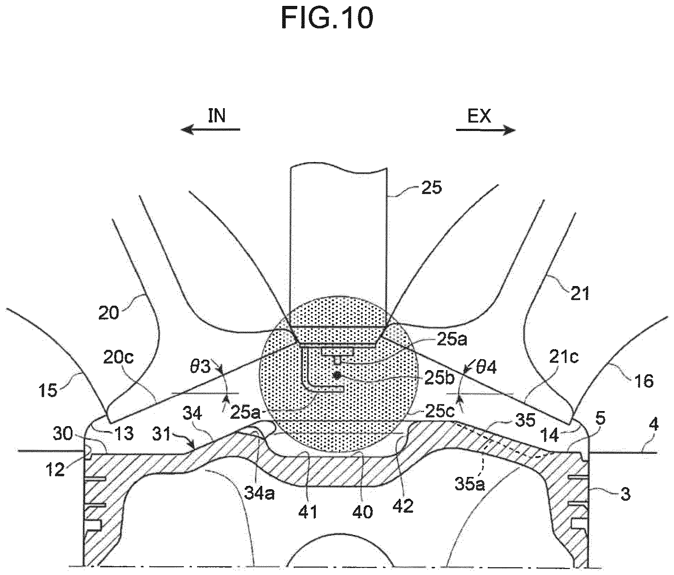

The intake valve 20 includes a valve stem 20a, and a valve head 20b formed at a lower end of the valve stem 20a. A valve head bottom surface 20c being a bottom surface of the valve head 20b is formed in such a way as to be orthogonal to a valve axis line 20d being a center axis of the valve stem 20a, and parallel to the intake-side inclined surface 13 of the ceiling surface 12. Specifically, the valve head bottom surface 20c of the intake valve 20 is formed in such a way that an angle (θ3 in FIG. 10 to be described later) with respect to an orthogonal plane orthogonal to the center axis 2a of the cylinder 2 is 23 degrees.

The exhaust valve 21 includes a valve stem 21a, and a valve head 21b formed at a lower end of the valve stem 21a. A valve head bottom surface 21c being a bottom surface of the valve head 21b is formed in such a way as to be orthogonal to a valve axis line 21d being a center axis of the valve stem 21a, and parallel to the exhaust-side inclined surface 14 of the ceiling surface 12. Specifically, the valve head bottom surface 21c of the exhaust valve 21 is formed in such a way that an angle (θ4 in FIG. 10 to be described later) with respect to an orthogonal plane orthogonal to the center axis 2a of the cylinder 2 is 22 degrees.

A fuel injection valve 24 for injecting fuel into the combustion chamber 8, and a spark plug 25 for igniting a fuel-air mixture containing fuel and air, which is generated in the combustion chamber 8 by the injection, are provided in the cylinder 4. The fuel injection valve 24 is disposed on a peripheral portion of the ceiling surface 12 on the intake side in such a way as to face the combustion chamber 8. The spark plug 25 is disposed on a middle portion of the ceiling surface 12 in such a way as to face the combustion chamber 8.

The spark plug 25 is mounted on the cylinder head 4 in such a way that electrodes 25a at a distal end of the spark plug 25 are exposed within the combustion chamber 8. The spark plug 25 is connected to a spark coil unit 26 provided on an upper portion of the cylinder head 4. The spark coil unit 26 generates sparks from the electrodes 25a of the spark plug 25 at a predetermined timing, and ignites a fuel-air mixture within the combustion chamber 8.

A fuel supply pipe 28 through which fuel is pneumatically fed from a fuel supply system (not illustrated) including a fuel tank, fuel pump, and the like is communicatively connected to the fuel injection valve 24. The fuel injection valve 24 is disposed between two intake ports 15, and includes a distal end surface 27 exposed within the combustion chamber 8. The fuel injection valve 24 is disposed in such a way that the distal end surface 27 is oriented obliquely downwardly, and injects fuel at a predetermined timing onto the top surface 10 of the piston 5 from the distal end surface 27.

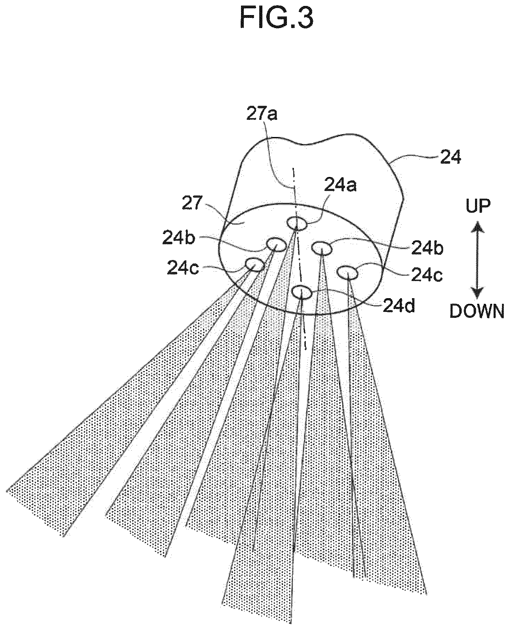

FIG. 3 is a perspective view illustrating details of the fuel injection valve 24. As illustrated in FIG. 3, the fuel injection valve 24 is a multi-hole injection valve having a plurality of injection holes in the distal end surface 27. The distal end surface 27 includes a plurality of injection holes 24a, 24b, 24c, and 24d, which are disposed bilaterally symmetrical with respect to a center axis 27a extending in an up-down direction. Specifically, the distal end surface 27 includes one first injection hole 24a located at a middle on an uppermost row, two second injection holes 24b located on a slightly upper side on a middle row, two third injection holes 24c located on a slightly lower side on the middle row, and one fourth injection hole 24d located at a middle on a lowermost row. Both of the first injection hole 24a and the fourth injection hole 24d are disposed on the center axis 27a. The two second injection holes 24b are disposed bilaterally with respect to the center axis 27a. The two third injection holes 24c are disposed bilaterally with respect to the center axis 27a, and at positions away from the center axis 27a with respect to the second injection holes 24b. Fuel injected through each of the injection holes 24a, 24b, 24c, 24d is sprayed within the combustion chamber 8 while forming a mist of a conical shape, and is uniformly distributed within the combustion chamber 8.

As described above, in the engine 1 according to the present embodiment, an intake port (tumble port) capable of generating a tumble flow within the combustion chamber 8 is employed as the intake port 15. A tumble flow not only promotes mixing of fuel and air, but also promotes combustion of a fuel-air mixture containing fuel and air. Specifically, when a tumble flow collapses, as the piston 5 approaches a compression top dead center (in other words, as the combustion chamber 8 is reduced), turbulence is generated within the combustion chamber 8 by the collapse, and combustion of a fuel-air mixture is promoted by the generated turbulence. As a flow rate of a tumble flow increases, turbulence energy increases, and combustion of a fuel-air mixture is promoted. In the present specification, an increase in turbulence energy means an increase in kinetic energy of turbulence. Turbulence energy increases, when a flow rate of turbulence increases, or a number of occurrences of turbulence increases, for example.

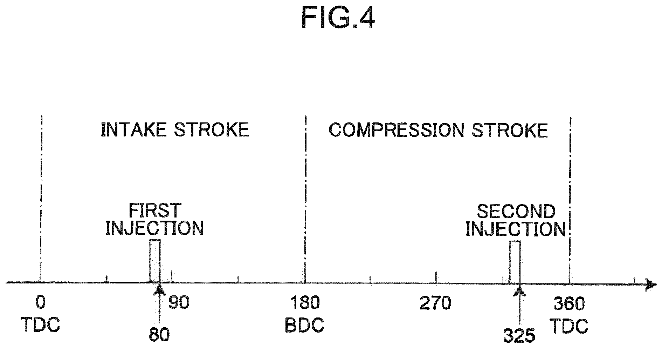

FIG. 4 is a time chart illustrating a timing of fuel injection. As illustrated in FIG. 4, when the engine 1 is in a normal operating condition, fuel injection from the fuel injection valve 24 is performed two times, namely, during an intake stroke and a compression stroke. Specifically, the fuel injection valve 24 performs first injection in a former half period of an intake stroke, and performs second injection in a latter half period of a compression stroke. The first injection is finished, for example, when a crank angle is 80 degrees, and the second injection is finished, for example when a crank angle is 325 degrees. A crank angle herein is an angle, when it is assumed that a crank angle when the piston is at an intake top dead center is 0 degree (the same definition is also applied to the following description).

The first injection to be performed in a former half period of an intake stroke forms a uniform fuel-air mixture (fuel-air mixture in which fuel and air are homogeneously mixed) within the combustion chamber 8, when the piston is in the vicinity of a compression top dead center. The second injection to be performed in a latter half period of a compression stroke forms a fuel-air mixture having a relatively high fuel concentration (in other words, a fuel-air mixture in which combustion easily occurs) around the spark plug 25, when the piston is in the vicinity of a compression top dead center. The second injection is performed after the piston 5 approaches a position relatively near a top dead center. Therefore, a volume of the combustion chamber 8 when the second injection is performed is smaller than a volume of the combustion chamber 8 when the first injection is performed.

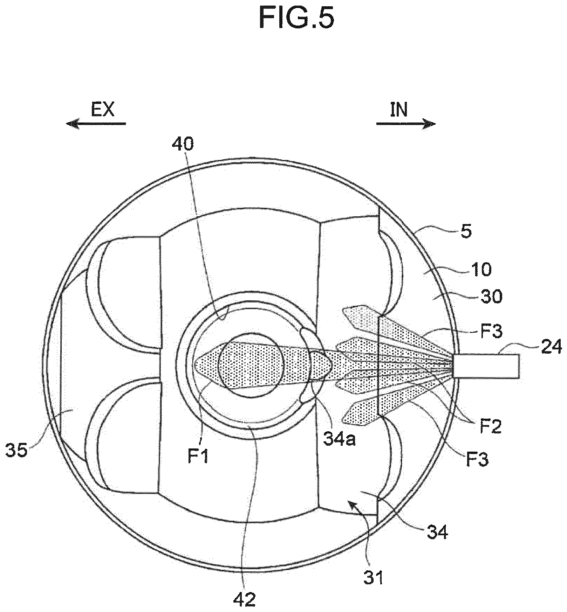

FIG. 5 is an explanatory diagram for describing how fuel to be injected from the fuel injection valve 24 is sprayed. Specifically, FIG. 5 illustrates how fuel is sprayed, when the fuel injection valve 24 performs the second injection. As illustrated in FIG. 5, a mist F1 of fuel injected through the first injection hole 24a by the second injection moves toward a cavity 40 (details will be described later), which is formed in the top surface 10 of the piston 5. Further, mists F2 and F3 of fuel injected through the second injection holes 24b and the third injection holes 24c by the second injection move toward an intake-side inclined surface 34 of a protrusion 31 (details will be described later), which is formed on the top surface 10 of the piston 5.

As the second injection is performed, the mist F1 through the first injection hole 24a moves toward the spark plug 25, while being guided upwardly by a peripheral surface 42 of the cavity 40; and the mists F2 and F3 through the second injection holes 24b and the third injection holes 24c move toward the spark plug 25 after colliding with the intake-side inclined surface 34. Thus, a fuel-air mixture having a high fuel concentration is formed around the spark plug 25 (in a center portion of the combustion chamber 8), as compared with a fuel-air mixture on a portion other than the above (on an outer peripheral portion of the combustion chamber 8).

After the second injection is performed, ignition by the spark plug 25 (spark ignition) is performed in a latter half period of a compression stroke and when the piston is in the vicinity of a compression top dead center, and a fuel-air mixture is combusted. The spark ignition is performed, for example, when a crank angle is 340 degrees. In the engine 1 according to the present embodiment, fuel is injected two times, and a fuel-air mixture having a relatively high fuel concentration is formed around the spark plug 25 at a point of time when spark ignition occurs. Therefore, combustion stability is sufficiently high.

Spark ignition is performed in a latter half period of a compression stroke (e.g. when a crank angle is 340 degrees) as described above when the engine 1 is in a normal operating condition after warming-up is completed. On the other hand, when the engine 1 is started in a cold state, in order to raise a temperature of the catalyst and activate the catalyst, a timing of spark ignition (ignition timing) is retarded, and a temperature of exhaust gas is raised. When an ignition timing is retarded, an effective expansion ratio is lowered, and temperature lowering of exhaust gas is suppressed. Therefore, exhaust gas discharged onto the catalyst is kept at a high temperature. In this way, also when the engine 1 is operated in a cold state in which an ignition timing is retarded, it is possible to secure satisfactory combustion stability by employing the above-described injection pattern by which a fuel-air mixture having a relatively high fuel concentration is formed around the spark plug 25.

Although not illustrated, a control unit for controlling the engine 1 and components associated with the engine 1 is provided in the engine 1. The control unit controls components such as the fuel injection valve 24, the spark plug 25, and the variable valve mechanism, based on various pieces of information to be acquired from a sensor and the like.

Next, the piston 5 of the engine 1 according to the present embodiment is described.

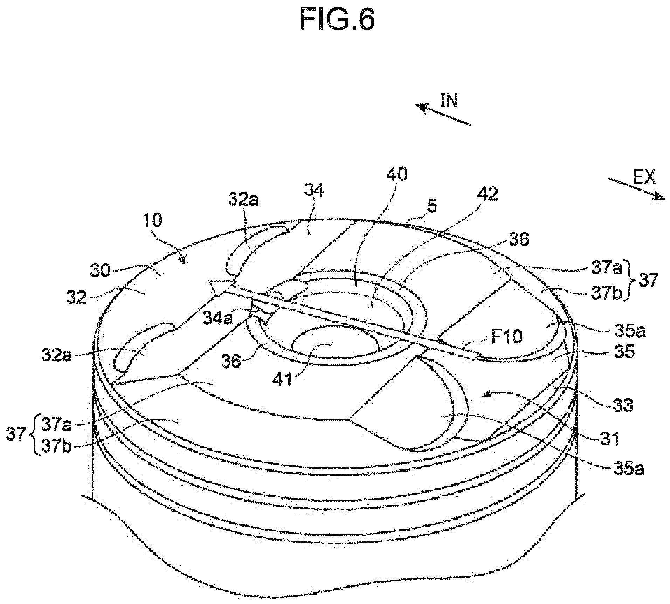

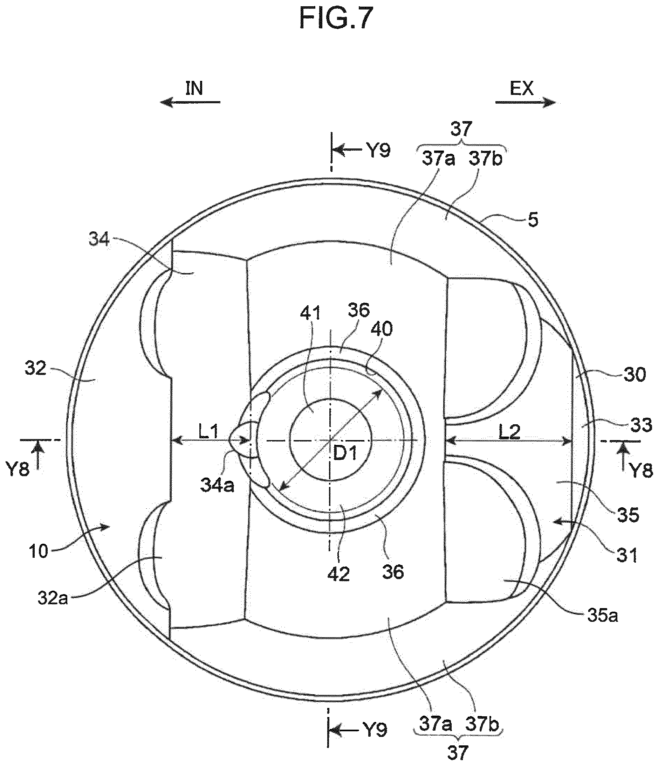

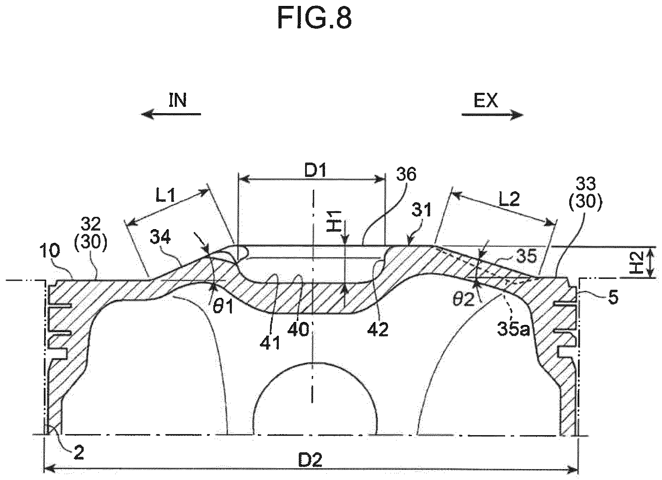

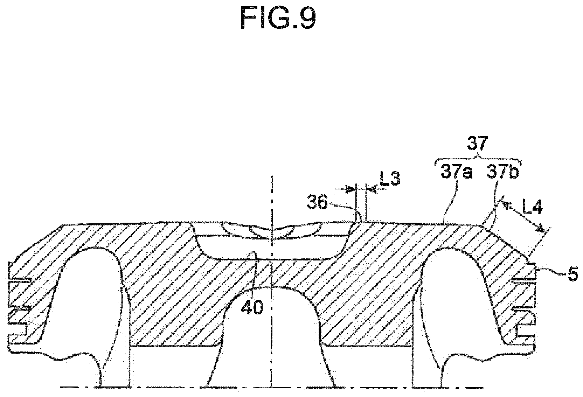

FIG. 6 is a perspective view of the piston 5. FIG. 7 is a plan view of the piston 5. FIG. 8 is a cross-sectional view of the piston 5 taken along the line Y8-Y8 in FIG. 7. FIG. 9 is a cross-sectional view of the piston 5 taken along the line Y9-Y9 in FIG. 7. FIG. 10 is a cross-sectional view illustrating the piston 5 in FIG. 8 together with the cylinder head 4, the intake valve 20, the exhaust valve 21, and the spark plug 25.

The engine 1 according to the present embodiment is configured in such a way that a geometric compression ratio being a ratio between a volume of the combustion chamber 8 when the piston 5 is at a top dead center, and a volume of the combustion chamber 8 when the piston 5 is at a bottom dead center is 12 or larger. As illustrated in FIGS. 6 to 10, the top surface 10 of the piston 5 includes a base surface 30 orthogonal to the center axis 2a of the cylinder 2, and the protrusion 31 raised upwardly with respect to the base surface 30 (toward the cylinder head 4). The protrusion 31 is raised in such a way that a height thereof increases toward a middle of the piston 5 along the ceiling surface 12 of the combustion chamber 8. The downwardly recessed cavity 40 is formed in a middle of the protrusion 31 and in a position associated with the spark plug 25.

The base surface 30 includes an intake-side horizontal surface 32 located on the intake side with respect to the protrusion 31, and an exhaust-side horizontal surface 33 located on the exhaust side with respect to the protrusion 31. The intake-side horizontal surface 32 and the exhaust-side horizontal surface 33 are formed in such a way as to be orthogonal to a center axis of the piston 5 (center axis 2a of the cylinder 2). A downwardly recessed intake-valve recess 32a is formed in the intake-side horizontal surface 32 at a position associated with the intake valve 20 for avoiding contact with the intake valve 20.

The protrusion 31 is formed into a pent-roof shape along the ceiling surface 12 of the combustion chamber 8. Specifically, the protrusion 31 includes the intake-side inclined surface 34 inclined along the intake-side inclined surface 13 of the ceiling surface 12 (in such a way that a height of the protrusion 31 decreases toward the intake side), and an exhaust-side inclined surface 35 inclined along the exhaust-side inclined surface 14 of the ceiling surface 12 (in such a way that a height of the protrusion 31 decreases toward the exhaust side). Each of the intake-side inclined surface 34 and the exhaust-side inclined surface 35 is formed into a flat shape.

A downwardly recessed exhaust-valve recess 35a is formed in the exhaust-side inclined surface 35 of the protrusion 31 at a position associated with the exhaust valve 21 for avoiding contact with the exhaust valve 21. The exhaust-valve recess 35a is formed in such a way that a bottom surface thereof is parallel to the valve head bottom surface 21c of the exhaust valve 21.

The protrusion 31 includes, between the intake-side inclined surface 34 and the exhaust-side inclined surface 35, an annular-shaped upper surface 36 along a perimeter of the cavity 40, and a pair of lateral surfaces 37 extending from the upper surface 36, while inclining toward an outer periphery of the piston 5. The paired lateral surfaces 37 are continued to each other on the exhaust side of the cavity 40. The upper surface 36 is formed into a flat shape parallel to the base surface 30 on a middle portion of the piston 5 (around the cavity 40). The paired lateral surfaces 37 are formed into a conical shape.

Each of the paired lateral surfaces 37 includes a first inclined surface 37a disposed on a middle side of the piston 5 and extending from the upper surface 36 while inclining downwardly toward the outer periphery of the piston 5, and a second inclined surface 37b disposed on an outer periphery of the piston 5 with respect to the first inclined surface 37a, and inclined downwardly with an inclination angle larger than an inclination angle of the first inclined surface 37a. Each of the first inclined surface 37a and the second inclined surface 37b is formed into a conical shape.

In the engine 1 according to the present embodiment, since the protrusion 31 is formed on the top surface 10 of the piston 5, if the cavity 40 is not formed in the protrusion 31, an initial flame front being an outer peripheral front of initial flame, which spreads when being triggered by ignition by the spark plug 25, may interfere with the top surface 10 of the piston 5 at an early stage. In the present embodiment, however, the cavity 40 is formed in the protrusion 31 at a position associated with the spark plug 25. Therefore, it is possible to retard interference between an initial flame front and the piston 5.

As illustrated in FIG. 10, the cavity 40 is formed in such a way as to retard interference with an imaginary spherical front 25c mimicking flame that grows spherically from a spark point 25b at a middle between the electrodes 25a of the spark plug 25. Specifically, the cavity 40 includes a bottom surface 41 of a circular flat shape, and a substantially tubular peripheral surface 42 raising upwardly from a periphery of the bottom surface 41. The peripheral surface 42 is smoothly connected to the bottom surface 41 by forming a lower part of the peripheral surface 42 into a curved shape in a cross-sectional view. The peripheral surface 42 of the cavity 40 may be formed into such a shape that coincides with at least a part of the imaginary spherical front 25c.

As illustrated in FIGS. 5 to 8, a cutout 34a is formed in an upper end of the intake-side inclined surface 34 of the piston 5, in other words, a part of a peripheral portion of the cavity 40 on the intake side. The mist F1 of fuel injected through the first injection hole 24a of the fuel injection valve 24 by the second injection passes through the cutout 34a, and collides with the peripheral surface 42 of the cavity 40 on the exhaust side. The mist F1 colliding with the peripheral surface 42 moves toward the electrodes 25a of the spark plug 25, while being guided upwardly by the peripheral surface 42.

As described above, in the engine 1 according to the present embodiment, by forming the protrusion 31 on the top surface 10 of the piston 5, a geometric compression ratio is increased, and by forming the cavity 40 in the protrusion 31 at a position associated with the spark plug 25, interference between an initial flame front and the piston 5 is retarded, whereby flame propagation is enhanced.

As illustrated in FIG. 10, the intake-side inclined surface 34 of the protrusion 31 is a surface parallel to the valve head bottom surface 20c of the intake valve 20 (and the intake-side inclined surface 13 of the ceiling surface 12 parallel to the valve head bottom surface 20c). In the case of the present embodiment, as already described, the valve head bottom surface 20c of the intake valve 20 is formed in such a way that the angle θ3 with respect to an orthogonal plane orthogonal to the center axis 2a of the cylinder 2 is 23 degrees. Therefore, the intake-side inclined surface 34 of the protrusion 31 is also formed in such a way that an angle θ1 (FIG. 8) with respect to an orthogonal plane orthogonal to the center axis 2a of the cylinder 2 is 23 degrees.

On the other hand, the exhaust-side inclined surface 35 of the protrusion 31 is a surface non-parallel to the valve head bottom surface 21c of the exhaust valve 21 (and the exhaust-side inclined surface 14 of the ceiling surface 12 parallel to the valve head bottom surface 21c). Specifically, the exhaust-side inclined surface 35 of the protrusion 31 is formed in such a way that an angle thereof with respect to an orthogonal plane orthogonal to the center axis 2a of the cylinder 2 is smaller than that of the valve head bottom surface 21c of the exhaust valve 21. In the case of the present embodiment, as already described, the valve head bottom surface 21c of the exhaust valve 21 is formed in such a way that the angle θ4 with respect to an orthogonal plane orthogonal to the center axis 2a of the cylinder 2 is 22 degrees. Therefore, the exhaust-side inclined surface 35 of the protrusion 31 is formed in such a way that an angle θ2 (FIG. 8) with respect to an orthogonal plane orthogonal to the center axis 2a of the cylinder 2 is smaller than 22 degrees.

In other words, in the present embodiment, the intake-side inclined surface 34 and the exhaust-side inclined surface 35 of the protrusion 31 are formed in such a way that an inclination angle difference (θ4-θ2) between the exhaust-side inclined surface 35 and the valve head bottom surface 21c of the exhaust valve 21 is larger than an inclination angle difference (θ3-θ1) between the intake-side inclined surface 34 and the valve head bottom surface 20c of the intake valve 20. More specifically, in the present embodiment, a difference between the former inclination angle difference and the latter inclination angle difference is set to 3 degrees or larger.

For example, the angle θ2 defined by an orthogonal plane orthogonal to the center axis 2a of the cylinder 2 and the exhaust-side inclined surface 35 of the protrusion 31, in other words, the inclination angle θ2 of the exhaust-side inclined surface 35 with respect to the base surface 30 is set to 15.1 degrees. On the other hand, as described above, the angle θ4 defined by an orthogonal plane orthogonal to the center axis 2a of the cylinder 2 and the valve head bottom surface 21c of the exhaust valve 21 is 22 degrees. In this case, the inclination angle difference (θ4-θ2) between the exhaust-side inclined surface 35 and the valve head bottom surface 21c of the exhaust valve 21 is 6.9 degrees.

On the other hand, as described above, the angle θ1 defined by an orthogonal plane orthogonal to the center axis 2a of the cylinder 2 and the intake-side inclined surface 34 of the protrusion 31, in other words, the inclination angle θ1 of the intake-side inclined surface 34 with respect to the base surface 30, and the angle θ3 defined by an orthogonal plane orthogonal to the center axis 2a of the cylinder 2 and the valve head bottom surface 20c of the intake valve 20 are both 23 degrees. Specifically, in the present embodiment, the inclination angle difference (θ3-θ1) between the intake-side inclined surface 34 and the valve head bottom surface 20c of the intake valve 20 is 0 degree.

Therefore, in a case where the inclination angle θ2 of the exhaust-side inclined surface 35 with respect to the base surface 30 is set to 15.1 degrees as described above, a difference between the inclination angle difference (θ4-θ2) between the exhaust-side inclined surface 35 and the valve head bottom surface 21c of the exhaust valve 21, and the inclination angle difference (θ3-θ1) between the intake-side inclined surface 34 and the valve head bottom surface 20c of the intake valve 20, in other words, [(θ4-θ2) - (θ3-θ1)] is 6.9 degrees.

Further, the intake-side inclined surface 34 and the exhaust-side inclined surface 35 of the protrusion 31 are formed in such a way that the inclination angle θ2 of the exhaust-side inclined surface 35 with respect to the base surface 30 is smaller than the inclination angle θ1 of the intake-side inclined surface 34 with respect to the base surface 30; and the inclination angle difference (θ1-θ2) between the intake-side inclined surface 34 and the exhaust-side inclined surface 35 is 4 degrees or larger. For example, by setting the inclination angle θ1 of the intake-side inclined surface 34 to 23 degrees, and setting the inclination angle θ2 of the exhaust-side inclined surface 35 to 15.1 degrees, the inclination angle difference (θ1-θ2) between the intake-side inclined surface 34 and the exhaust-side inclined surface 35 is set to 7.9 degrees.

As described above, in the present embodiment, the inclination angle difference (θ1-θ2) between the intake-side inclined surface 34 and the exhaust-side inclined surface 35 is set to 4 degrees or larger; and a difference between the inclination angle difference (θ4-θ2) between the exhaust-side inclined surface 35 and the valve head bottom surface 21c of the exhaust valve 21, and the inclination angle difference (θ3-θ1) between the intake-side inclined surface 34 and the valve head bottom surface 20c of the intake valve 20, in other words, [(θ4-θ2) - (θ3-θ1)] is set to 3 degrees or larger. Thus, it is possible to form the protrusion 31 of a volume sufficient for achieving a high compression ratio, while setting the inclination angle θ2 of the exhaust-side inclined surface 35 to a relatively small value. The exhaust-side inclined surface 35 is a surface with which a tumble flow contacts, when the tumble flow (see the arrow 19 in FIG. 2) flowing from the intake port 15 toward the exhaust side flows back from the exhaust side toward the intake side along the top surface 10 of the piston 5. Therefore, setting the inclination angle θ2 of the exhaust-side inclined surface 35 to a small value contributes to suppressing an operation that a tumble flow is decelerated (blocked) by the protrusion 31.

When the inclination angle difference (θ1-θ2) between the intake-side inclined surface 34 and the exhaust-side inclined surface 35 is excessively increased while substantially keeping a volume of the protrusion 31, a height of the protrusion 31, consequently, a depth HI of the cavity 40 (height of the peripheral surface 42) excessively decreases, and an operation of guiding fuel by the peripheral surface 42 of the cavity 40 when the second injection is performed, in other words, an operation of moving fuel upwardly toward the surrounding of the spark plug 25 may be impaired. In order to sufficiently exhibit the operation of guiding fuel, it is necessary to sufficiently secure a height of the peripheral surface 42. In view of the above, it is preferable to set an inclination difference between the intake-side inclined surface 34 and the exhaust-side inclined surface 35 to 11 degrees or smaller.

As illustrated in FIGS. 7 and 8, the cavity 40 in the protrusion 31 is formed in such a way that a ratio (H1/D1) of the depth H1 of the cavity 40 with respect to a diameter D1 of the cavity 40 is 0.3 or smaller. For example, the ratio (H1/D1) of the depth HI of the cavity 40 with respect to the diameter D1 of the cavity 40 is set to 0.26. It is assumed that the diameter D1 of the cavity 40 is a diameter of an upper end of the cavity 40, more specifically, a diameter of an upper end of a portion of the peripheral surface 42 of the cavity 40, except for a fillet (chamfered portion) of an upper end thereof.

Setting the ratio (H1/D1) to 0.3 or smaller means that the cavity 40 has a relatively flat shape (shallow bottom). If the cavity 40 has a flat shape, gas flow within the cavity 40 is less likely to be impaired. Thus, an operation of drawing gas flow downwardly (toward the bottom surface 41) by the cavity 40 is suppressed. Therefore, it is possible to suppress a tumble flow from moving toward the bottom surface 41 of the cavity 40, when the tumble flow flows on a middle portion of the top surface 10 of the piston 5; and it is possible to smoothly guide the tumble flow from the exhaust-side inclined surface 35 toward the intake-side inclined surface 34.

When the ratio (H1/D1) of the depth H1 of the cavity 40 with respect to the diameter D1 of the cavity 40 is excessively decreased, while substantially keeping a volume of the protrusion 31, the depth HI of the cavity 40 (height of the peripheral surface 42) excessively decreases, and an operation of guiding fuel by the peripheral surface 42 of the cavity 40 when the second injection is performed, namely, an operation of moving fuel upwardly toward the surrounding of the spark plug 25 may be impaired. In order to sufficiently exhibit the operation of guiding fuel, it is preferable to set the ratio (H1/D1) to 0.16 or larger.

As illustrated in FIG. 8, the intake-side inclined surface 34 and the exhaust-side inclined surface 35 of the protrusion 31 are formed in such a way that, in a cross section passing through a center axis of the piston 5 and orthogonal to a crank axis line 6a (axis direction of the crankshaft 6), a ratio (L2/L1) of a length L2 of the exhaust-side inclined surface 35 with respect to a length L1 of the intake-side inclined surface 34 is 1.25 or larger. For example, the ratio (L2/L1) of the length L2 of the exhaust-side inclined surface 35 with respect to the length L1 of the intake-side inclined surface 34 is set to 1.48. As illustrated in FIG. 7, the length L1 of the intake-side inclined surface 34 is equal to a length between a boundary peripheral portion between the intake-side inclined surface 34 and the intake-side horizontal surface 32, and a boundary peripheral portion between the intake-side inclined surface 34 and the upper surface 36. Further, the length L2 of the exhaust-side inclined surface 35 is equal to a length between a boundary peripheral portion between the exhaust-side inclined surface 35 and the exhaust-side horizontal surface 33, and a boundary peripheral portion between the exhaust-side inclined surface 35 and the first inclined surface 37a.

Thus, since a flow channel of a tumble flow flowing on the exhaust-side inclined surface 35 is made long, it is possible to advantageously exhibit an operation of guiding a tumble flow by the exhaust-side inclined surface 35. Consequently, an operation that a tumble flow is decelerated by the protrusion 31 is suppressed, and a tumble flow is kept at a high speed.

When the ratio (L2/L1) of the length L2 of the exhaust-side inclined surface 35 with respect to the length L1 of the intake-side inclined surface 34 is excessively increased, while substantially keeping a volume of the protrusion 31, a height of the protrusion 31, consequently, the depth HI of the cavity 40 (height of the peripheral surface 42) excessively decreases, and an operation of guiding fuel by the peripheral surface 42 of the cavity 40 when the second injection is performed, namely, an operation of moving fuel upwardly toward the surrounding of the spark plug 25 may be impaired. In order to sufficiently exhibit the operation of guiding fuel, it is necessary to sufficiently secure a height of the peripheral surface 42. In view of the above, it is preferable to set the ratio (L2/L1) to 1.9 or smaller.

As illustrated in FIG. 8, the protrusion 31 is formed in such a way that a ratio (H2/D2) of a height H2 of the protrusion 31 with respect to an inner diameter D2 of the cylinder 2 is 0.08 or smaller. The height H2 of the protrusion 31 is equal to a height from the base surface 30 of the top surface 10 of the piston 5 (the intake-side horizontal surface 32 and the exhaust-side horizontal surface 33) to the upper surface 36. For example, the ratio (H2/D2) of the height H2 of the protrusion 31 with respect to the inner diameter D2 of the cylinder 2 is set to 0.06.

Thus, it is possible to suppress an increase in the height H2, while forming the protrusion 31 of a volume sufficient for achieving a high compression ratio. Consequently, it is possible to suppress a tumble flow from decelerating by the protrusion 31, when the tumble flow flows from the exhaust side toward the intake side along the top surface 10 of the piston 5.

When the ratio (H2/D2) of the height H2 of the protrusion 31 with respect to the inner diameter D2 of the cylinder 2 is excessively decreased, while substantially keeping a volume of the protrusion 31, a height of the protrusion 31, consequently, the depth HI of the cavity 40 (height of the peripheral surface 42) excessively decreases, and an operation of guiding fuel by the peripheral surface 42 of the cavity 40 when the second injection is performed, namely, an operation of moving fuel upwardly toward the surrounding of the spark plug 25 may be impaired. In order to sufficiently exhibit the operation of guiding fuel, it is necessary to sufficiently secure a height of the peripheral surface 42. In view of the above, it is preferable to set the ratio (H2/D2) to 0.056 or larger.

The piston 5 is formed in such a way that a ratio (L3/L4) of a length L3 of the upper surface 36 with respect to a length L4 of the second inclined surface 37b is 0.8 or smaller in a radial cross-sectional view illustrated in FIG. 9. For example, the ratio (L3/L4) of the length L3 of the upper surface 36 with respect to the length L4 of the second inclined surface 37b is set to 0.24.

In this way, when the length of the second inclined surface 37b located on the outer periphery of the piston 5 is set longer than the length of the upper surface 36 on a middle portion of the piston 5, an inclination angle of the first inclined surface 37a extending between the second inclined surface 37a and the upper surface 36 decreases. Thus, it is possible to form the second inclined surface 37b having a large inclination angle (large step) on an outer periphery of the first inclined surface 37a, while gently inclining the first inclined surface 37a of the lateral surface 37 located on the middle side of the piston 5. This is advantageous in forming the protrusion 31 of a volume sufficient for achieving a high compression ratio. Further, since a tumble flow is made easy to flow on a middle portion of the piston 5 where a flow rate is large, it is possible to suppress, as a whole, an operation that a tumble flow is decelerated by the protrusion 31.

When the ratio (L3/L4) of the length L3 of the upper surface 36 with respect to the length L4 of the second inclined surface 37b is excessively decreased, while substantially keeping a volume of the protrusion 31, the height H2 of the protrusion 31 decreases, and the depth HI of the cavity 40 (height of the peripheral surface 42) excessively decreases. Consequently, an operation of guiding fuel by the peripheral surface 42 when the second injection is performed, namely, an operation of moving fuel upwardly toward the surrounding of the spark plug 25 may be impaired.

As described above, in the engine (spark-ignition internal combustion engine) according to the present embodiment, the protrusion 31 including the intake-side inclined surface 34 and the exhaust-side inclined surface 35 is formed on the top surface 10 of the piston 5, the cavity 40 is formed in the protrusion 31 at a position associated with the spark plug 25, and the intake port 15 capable of generating a tumble flow is formed in the cylinder head 4. Further, the intake-side inclined surface 34 and the exhaust-side inclined surface 35 are formed in such a way that the inclination angle θ2 defined by an orthogonal plane orthogonal to the center axis 2a of the cylinder 2 and the exhaust-side inclined surface 35 is smaller than the angle θ4 defined by the orthogonal plane and the valve head bottom surface 21c of the exhaust valve 21, and the inclination angle difference (θ4-θ2) between the exhaust-side inclined surface 35 and the valve head bottom surface 21c of the exhaust valve 21 is larger than the inclination angle difference (θ3-θ1) between the intake-side inclined surface 34 and the valve head bottom surface 20c of the intake valve 20 by 3 degrees or larger.

In this configuration, since the protrusion 31 is formed on the top surface 10 of the piston 5, it is possible to reduce a volume of the combustion chamber 8 by the protrusion 31, and increase a geometric compression ratio. Further, since the cavity 40 is formed in the protrusion 31 at a position associated with the spark plug 25, it is possible to retard interference between the piston 5 and flame, and enhance flame propagation.

Further, since the inclination angle θ2 of the exhaust-side inclined surface 35 is set to a relatively small value, it is possible to suppress an operation that a tumble flow is decelerated by the protrusion 31, while securing a volume of the protrusion 31 sufficient for achieving a high compression ratio. Thus, it is possible to increase fuel efficiency.

Specifically, the inclination angle θ2 of the exhaust-side inclined surface 35 is smaller than the inclination angle θ4 of the valve head bottom surface 21c of the exhaust valve 21, and the inclination angle difference (θ4-θ2) between the exhaust-side inclined surface 35 and the valve head bottom surface 21c of the exhaust valve 21 is larger than the inclination angle difference (θ3-θ1) between the intake-side inclined surface 34 and the valve head bottom surface 20c of the intake valve 20 by 3 degrees or larger. In other words, since both of a relationship (i) 02<04, and a relationship (ii) [(θ4-θ2) - (θ3-θ1)]>3 are satisfied, it is possible to make the inclination angle θ2 of the exhaust-side inclined surface 35 sufficiently smaller than the inclination angle θ4 of the valve head bottom surface 21c of the exhaust valve 21. The exhaust-side inclined surface 35 is a surface with which a tumble flow contacts, when the tumble flow flows from the exhaust side toward the intake side along the top surface 10 of the piston 5. Therefore, setting the inclination angle θ2 of the exhaust-side inclined surface 35 to a small value contributes to suppressing an operation that a tumble flow is decelerated (blocked) by the protrusion 31. Thus, since a tumble flow is kept at a high speed, it is possible to increase turbulence energy generated by collapse of a tumble flow. Since the increased turbulence energy promotes combustion of a fuel-air mixture, it is possible to increase fuel efficiency by shortening a combustion period.

Further, the intake-side inclined surface 34 and the exhaust-side inclined surface 35 are formed in such a way that the inclination angle θ2 of the exhaust-side inclined surface 35 is smaller than the inclination angle θ1 of the intake-side inclined surface 34. In this configuration, as compared with a case that an inclination angle of the exhaust-side inclined surface 35 is made substantially equal to an inclination angle of the intake-side inclined surface 34, it is possible to suppress an operation that a tumble flow is decelerated by the protrusion 31, in other words, an operation that a tumble flow (see an arrow F10 in FIG. 6) flowing from the exhaust side toward the intake side along the top surface 10 of the piston 5 is decelerated. Thus, it is possible to increase turbulence energy to thereby further increase fuel efficiency.

The present invention is not limited to the exemplified embodiment. Various improvements and design modifications are available, as far as the improvements and design modifications do not depart from the gist of the present invention.

### EXAMPLES

A plurality of types of the engine 1 (hereinafter, referred to as a test engine) provided with the piston 5 in which the inclination angle θ2 of the exhaust-side inclined surface 35 of the protrusion 31 was changed in various ways were actually prepared, and a pilot experiment of examining performance of the test engines was carried out. Specifically, as the test engines, prepared were a plurality of types of the engine 1 provided with the piston 5 in which a difference between the inclination angle difference (θ4-θ2) between the exhaust-side inclined surface 35 and the valve head bottom surface 21c of the exhaust valve 21, and the inclination angle difference (θ3-θ1) between the intake-side inclined surface 34 and the valve head bottom surface 20c of the intake valve 20 was changed in various ways by changing the inclination angle θ2 of the exhaust-side inclined surface 35 in various ways, while substantially keeping the volume of the protrusion 31. The test engines were operated in a same operating condition (a fully opened throttle valve and an engine speed of 2000 rpm), and a combustion period during the operation was analyzed. The combustion period was defined in terms of a crank angle from an ignition timing until a time when one-half of the total quantity of heat that is supposed to be generated has been generated.

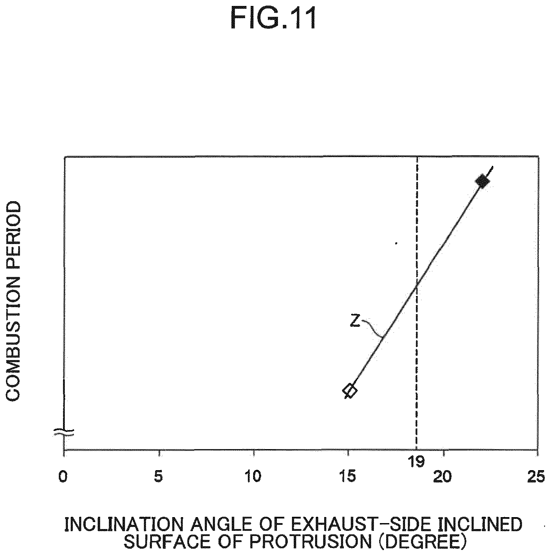

FIG. 11 is a graph acquired by the pilot experiment, and illustrates a relationship between the inclination angle θ2 of the exhaust-side inclined surface 35 of the protrusion 31 and the combustion period.

A conventional engine provided with a piston in which inclination angles of the valve head bottom surface 20c of the intake valve 20, the valve head bottom surface 21c of the exhaust valve 21, the intake-side inclined surface 34, and the exhaust-side inclined surface 35 were equal to one another was used as a conventional example; and an engine according to the present embodiment in which the inclination angle difference (θ4-θ2) between the exhaust-side inclined surface 35 and the valve head bottom surface 21c of the exhaust valve 21 was larger than the inclination angle difference (θ3-θ1) between the intake-side inclined surface 34 and the valve head bottom surface 20c of the intake valve 20 by 3 degrees or larger was used as a present example.

Specifically, in FIG. 11, as a conventional example, prepared was an engine provided with a piston in which the inclination angle θ2 of the exhaust-side inclined surface 35 and the inclination angle θ4 of the valve head bottom surface 21c of the exhaust valve 21 were respectively set to 22 degrees, and the inclination angle θ1 of the intake-side inclined surface 34 and the inclination angle θ3 of the valve head bottom surface 20c of the intake valve 20 were respectively set to 23 degrees, in other words, a difference between the inclination angle difference (θ4-θ2) between the exhaust-side inclined surface 35 and the valve head bottom surface 21c of the exhaust valve 21, and the inclination angle difference (θ3-θ1) between the intake-side inclined surface 34 and the valve head bottom surface 20c of the intake valve 20 was set to 0 degree.

On the other hand, as a present example, prepared was an engine provided with a piston in which the inclination angle θ2 of the exhaust-side inclined surface 35 was set to 15.1 degrees, the inclination angle θ4 of the valve head bottom surface 21c of the exhaust valve 21 was set to 22 degrees, and the inclination angle θ1 of the intake-side inclined surface 34 and the inclination angle θ3 of the valve head bottom surface 20c of the intake valve 20 were respectively set to 23 degrees, in other words, a difference between the inclination angle difference (θ4-θ2) between the exhaust-side inclined surface 35 and the valve head bottom surface 21c of the exhaust valve 21, and the inclination angle difference (θ3-θ1) between the intake-side inclined surface 34 and the valve head bottom surface 20c of the intake valve 20 was set to 6.9 degrees.

Then, the graph of FIG. 11 was acquired by indicating a result acquired by operating and evaluating the engine as the conventional example by a solid square plot; and indicating a result acquired by operating and evaluating the engine as the present example by a hollow square plot. Further, FIG. 11 also illustrates a line Z indicating a relationship between the inclination angle θ2 of the exhaust-side inclined surface 35 and the combustion period, based on the plots of the conventional example and the present example.

As illustrated by the line Z in FIG. 11, as the inclination angle θ2 of the exhaust-side inclined surface 35 decreases, the combustion period is shortened. Further, when the inclination angle θ2 is reduced to about 19 degrees, the combustion period is shortened by at least 10 %, as compared with the engine as the conventional example in which the inclination angle θ2 is 22 degrees. Therefore, it is obvious that setting the inclination angle θ2 of the exhaust-side inclined surface 35 to 19 degrees or smaller (see the broken line in FIG. 11), in other words, making the inclination angle θ2 of the exhaust-side inclined surface 35 smaller than the inclination angle θ4 (22 degrees) of the valve head bottom surface 21c of the exhaust valve 21 by 3 degrees or larger enables to suppress an operation that a tumble flow is decelerated and advantageously increase turbulence energy (thereby shortening the combustion period).

Since the inclination angle difference (θ3-θ1) between the inclination angle θ1 of the intake-side inclined surface 34 and the inclination angle θ3 of the valve head bottom surface 20c of the intake valve 20 is 0 degree, the above-described angle setting means making the inclination angle difference (θ4-θ2) between the inclination angle θ2 of the exhaust-side inclined surface 35 and the inclination angle θ4 of the valve head bottom surface 21c of the exhaust valve 21 larger than the inclination angle difference (θ3-θ1) between the inclination angle θ1 of the intake-side inclined surface 34 and the inclination angle θ3 of the valve head bottom surface 20c of the intake valve 20 by 3 degrees or larger.

### <Overview of Embodiments>

The following is an overview of the embodiment.

A spark-ignition internal combustion engine includes: a cylinder; a piston disposed to be reciprocatively movable within the cylinder; a cylinder head disposed above the cylinder, and configured to form a pent-roof combustion chamber in cooperation with an inner peripheral surface of the cylinder and a top surface of the piston; a spark plug disposed in the cylinder head in such a way as to face the combustion chamber; an intake port and an exhaust port formed in the cylinder head in such a way as to open in a ceiling surface of the combustion chamber; an intake valve disposed in the cylinder head in such a way as to open and close the intake port; and an exhaust valve disposed in the cylinder head in such a way as to open and close the exhaust port. A protrusion is formed on a top surface of the piston. The protrusion includes an intake-side inclined surface inclined along an intake-side ceiling surface of the combustion chamber and a valve head bottom surface of the intake valve, and an exhaust-side inclined surface inclined along an exhaust-side ceiling surface of the combustion chamber and a valve head bottom surface of the exhaust valve. A downwardly recessed cavity is formed in the protrusion at a position associated with the spark plug. The intake port has a shape capable of generating a tumble flow within the combustion chamber. The intake-side inclined surface and the exhaust-side inclined surface are formed in such a way that an angle defined by an orthogonal plane orthogonal to a center axis of the cylinder and the exhaust-side inclined surface is smaller than an angle defined by the orthogonal plane and the valve head bottom surface of the exhaust valve, and an inclination angle difference between the exhaust-side inclined surface and the valve head bottom surface of the exhaust valve is larger than an inclination angle difference between the intake-side inclined surface and the valve head bottom surface of the intake valve by 3 degrees or larger.

In this configuration, since the protrusion is formed on the top surface of the piston, it is possible to reduce a volume of the combustion chamber by the protrusion, and increase a geometric compression ratio. Further, since the cavity is formed in the protrusion at a position associated with the spark plug, it is possible to retard interference between the piston and flame, and enhance flame propagation.

Further, since the inclination angle of the exhaust-side inclined surface is set to a relatively small value, it is possible to suppress an operation that a tumble flow is decelerated by the protrusion, while securing a volume of the protrusion sufficient for achieving a high compression ratio. Thus, it is possible to increase fuel efficiency.

Specifically, the inclination angle of the exhaust-side inclined surface is smaller than the inclination angle of the valve head bottom surface of the exhaust valve, and the inclination angle difference between the exhaust-side inclined surface and the valve head bottom surface of the exhaust valve is larger than the inclination angle difference between the intake-side inclined surface and the valve head bottom surface of the intake valve by 3 degrees or larger. Therefore, it is possible to make the inclination angle of the exhaust-side inclined surface sufficiently smaller than the inclination angle of the valve head bottom surface of the exhaust valve. The exhaust-side inclined surface is a surface with which a tumble flow contacts, when the tumble flow flows from the exhaust side toward the intake side along the top surface of the piston. Therefore, setting the inclination angle of the exhaust-side inclined surface to a small value contributes to suppressing an operation that a tumble flow is decelerated (blocked) by the protrusion. Thus, since a tumble flow is kept at a high speed, it is possible to increase turbulence energy generated by collapse of a tumble flow. Since the increased turbulence energy promotes combustion of a fuel-air mixture, it is possible to increase fuel efficiency by shortening a combustion period.

Preferably, the intake-side inclined surface and the exhaust-side inclined surface may be formed in such a way that an inclination angle of the exhaust-side inclined surface is smaller than an inclination angle of the intake-side inclined surface.

In this configuration, as compared with a case that an inclination angle of the exhaust-side inclined surface is made substantially equal to an inclination angle of the intake-side inclined surface, it is possible to suppress an operation that a tumble flow is decelerated by the protrusion, in other words, an operation that a tumble flow flowing from the exhaust side toward the intake side along the top surface of the piston is decelerated. Thus, it is possible to increase turbulence energy to thereby further increase fuel efficiency.

Each of the configurations leading to the above-described advantageous effects enables to increase a geometric compression ratio of a cylinder. Therefore, it is possible to set a geometric compression ratio of the cylinder to 12 or larger, for example.

### INDUSTRIAL APPLICABILITY

As described above, according to the present invention, a spark-ignition internal combustion engine in which a protrusion is formed on a top surface of a piston, and a cavity is formed in the protrusion at a position associated with a spark plug is able to suppress an operation that a tumble flow is decelerated by the protrusion so as to increase fuel efficiency. Therefore, the present invention is advantageously used in a technical field of manufacturing a vehicle and the like in which a spark-ignition internal combustion engine of this type is mounted.

## Claims

1. A spark-ignition internal combustion engine comprising:
a cylinder (2);
a piston (5) disposed to be reciprocatively movable within the cylinder (2);
a cylinder head (4) disposed above the cylinder (2), and configured to form a pent-roof combustion chamber (8) in cooperation with an inner peripheral surface (9) of the cylinder (2) and a top surface (10) of the piston (5);
a spark plug (25) disposed in the cylinder head (4) in such a way as to face the combustion chamber (8);
an intake port (15) and an exhaust port (16) formed in the cylinder head (4) in such a way as to open in a ceiling surface (12) of the combustion chamber (8);
an intake valve (20) disposed in the cylinder head (4) in such a way as to open and close the intake port (15); and
an exhaust valve (21) disposed in the cylinder head (4) in such a way as to open and close the exhaust port (16), wherein
a protrusion (31) is formed on a top surface (10) of the piston (5),
the protrusion (31) includes an intake-side inclined surface (34) inclined along an intake-side ceiling surface (13) of the combustion chamber (8) and a valve head bottom surface (20c) of the intake valve (20), and an exhaust-side inclined surface (35) inclined along an exhaust-side ceiling surface (14) of the combustion chamber (8) and a valve head bottom surface (21c) of the exhaust valve (21),
a downwardly recessed cavity (40) is formed in the protrusion (31) at a position associated with the spark plug (25), and
the intake port (15) has a shape capable of generating a tumble flow within the combustion chamber (8),
**characterized in that**
the intake-side inclined surface (34) and the exhaust-side inclined surface (35) are formed in such a way that an angle (θ2) defined by an orthogonal plane orthogonal to a center axis (2a) of the cylinder (2) and the exhaust-side inclined surface (35) is smaller than an angle (θ4) defined by the orthogonal plane and the valve head bottom surface (21c) of the exhaust valve (21), and an inclination angle difference (θ4-θ2) between the exhaust-side inclined surface (35) and the valve head bottom surface (21c) of the exhaust valve (21) is larger than an inclination angle difference (θ3-θ1) between the intake-side inclined surface (34) and the valve head bottom surface (20c) of the intake valve (20) by 3 degrees or larger, and
a downwardly recessed exhaust-valve recess (35a) is formed in the exhaust-side inclined surface (35) at a position associated with the exhaust valve (21) in such a way that a bottom surface of the exhaust-valve recess (35a) is parallel to the valve head bottom surface (21c) of the exhaust valve (21).

2. The spark-ignition internal combustion engine according to claim 1, wherein
the intake-side inclined surface (34) and the exhaust-side inclined surface (35) are formed in such a way that an inclination angle (θ2) of the exhaust-side inclined surface (35) is smaller than an inclination angle (θ1) of the intake-side inclined surface (34).

3. The spark-ignition internal combustion engine according to claim 1 or 2, wherein
a geometric compression ratio of the cylinder (2) is 12 or larger.

## Patentansprüche

1. Fremdzündung-Verbrennungsmotor, umfassend:
einen Zylinder (2);
einen Kolben (5), der so angeordnet ist, dass er innerhalb des Zylinders (2) hin- und herbewegbar ist;
einen Zylinderkopf (4), der über dem Zylinder (2) angeordnet ist und konfiguriert ist, einen Pultdach-Brennraum (8) zusammen mit einer Innenumfangsfläche bzw. -oberfläche (9) des Zylinders (2) und einer oberen Fläche bzw. Oberfläche (10) des Kolbens (5) zu bilden;
eine Zündkerze (25), die in dem Zylinderkopf (4) derart angeordnet ist, dass sie dem Brennraum (8) zugewandt ist;
eine Einlassöffnung (15) und eine Auslassöffnung (16), die in dem Zylinderkopf (4) derart ausgebildet sind, dass sie sich in einer Deckenfläche bzw. - oberfläche (12) des Brennraums (8) öffnen;
ein Einlassventil (20), das in dem Zylinderkopf (4) derart angeordnet ist, dass es die Einlassöffnung (15) öffnet und schließt; und
ein Auslassventil (21), das in dem Zylinderkopf (4) derart angeordnet ist, dass es die Auslassöffnung (16) öffnet und schließt, wobei ein Vorsprung (31) an einer oberen Fläche bzw. Oberfläche (10) des Kolbens (5) ausgebildet ist,
der Vorsprung (31) eine einlassseitige geneigte Fläche bzw. Oberfläche (34), die entlang einer einlassseitigen Deckenfläche bzw. -oberfläche (13) des Brennraums (8) und einer Ventilkopfbodenfläche bzw. -oberfläche (20c) des Einlassventils (20) geneigt ist; und eine auslassseitige geneigte Fläche bzw. Oberfläche (35) enthält, die entlang einer auslassseitigen Deckenfläche bzw. - oberfläche (14) des Brennraums (8) und einer Ventilkopfbodenfläche bzw. - oberfläche (21c) des Auslassventils (21) geneigt ist;
ein nach unten ausgesparter Hohlraum (40) in dem Vorsprung (31) an einer Position ausgebildet ist, die der Zündkerze (25) zugeordnet ist, und
die Einlassöffnung (15) eine Form aufweist, die in der Lage ist, eine Wirbelströmung innerhalb des Brennraums (8) zu erzeugen,
**dadurch gekennzeichnet, dass**
die einlassseitige geneigte Fläche (34) und die auslassseitige geneigte Fläche (35) derart ausgebildet sind, dass ein Winkel (θ2), der durch eine orthogonale Ebene orthogonal zu einer Mittelachse (2a) des Zylinders (2) und die auslassseitige geneigte Fläche (35) definiert ist, kleiner ist als ein Winkel (θ4), der durch die orthogonale Ebene und die Ventilkopfbodenfläche (21c) des Auslassventils (21) definiert ist, und eine Neigungswinkeldifferenz (θ4-θ2) zwischen der auslassseitigen geneigten Fläche (35) und der Ventilkopfbodenfläche (21c) des Auslassventils (21) größer ist als eine Neigungswinkeldifferenz (θ3-θ1) zwischen der einlassseitigen geneigten Fläche (34) und der Ventilkopfbodenfläche (20c) des Einlassventils (20), und zwar um 3 Grad oder mehr, und
eine nach unten ausgesparte Auslassventilaussparung (35a) in der auslassseitigen geneigten Fläche (35) an einer dem Auslassventil (21) zugeordneten Position derart ausgebildet ist, dass eine Bodenfläche der Auslassventilaussparung (35a) parallel zu der Ventilkopfbodenfläche (21c) des Auslassventils (21) ist.

2. Fremdzündung-Verbrennungsmotor nach Anspruch 1, wobei die einlassseitige geneigte Fläche (34) und die auslassseitige geneigte Fläche (35) derart ausgebildet sind, dass ein Neigungswinkel (θ2) der auslassseitigen geneigten Fläche (35) kleiner ist als ein Neigungswinkel (θ1) der einlassseitigen geneigten Fläche (34).

3. Fremdzündung-Verbrennungsmotor nach Anspruch 1 oder 2, wobei ein geometrisches Verdichtungsverhältnis des Zylinders (2) 12 oder mehr beträgt.

## Revendications

1. Moteur à combustion interne à allumage par étincelle comprenant :
un cylindre (2) ;
un piston (5) disposé pour être mobile en va-et-vient au sein du cylindre (2) ;
une tête de cylindre (4) disposée au-dessus du cylindre (2) et configurée pour former une chambre de combustion à toit en terrasse (8) en coopération avec une surface périphérique interne (9) du cylindre (2) et une surface supérieure (10) du piston (5) ;
une bougie d'allumage (25) disposée dans la tête de cylindre (4) de manière à être tournée vers la chambre de combustion (8) ;
un orifice d'admission (15) et un orifice d'échappement (16) formés dans la tête de cylindre (4) de manière à s'ouvrir dans une surface de plafond (12) de la chambre de combustion (8) ;
une soupape d'admission (20) disposée dans la tête de cylindre (4) de manière à ouvrir et fermer l'orifice d'admission (15) ; et
une soupape d'échappement (21) disposée dans la tête de cylindre (4) de manière à ouvrir et fermer l'orifice d'échappement (16), dans lequel une saillie (31) est formée sur une surface supérieure (10) du piston (5),
la saillie (31) inclut une surface inclinée côté admission (34) inclinée le long d'une surface de plafond côté admission (13) de la chambre de combustion (8) et
une surface inférieure de tête de soupape (20c) de la soupape d'admission (20),
et une surface inclinée côté échappement (35) inclinée le long d'une surface de plafond côté échappement (14) de la chambre de combustion (8) et une surface inférieure de tête de soupape (21c) de la soupape d'échappement (21),
une cavité encastrée vers le bas (40) est formée dans la saillie (31) à une position associée à la bougie d'allumage (25), et
l'orifice d'admission (15) a une forme capable de générer un écoulement de tourbillon transversal au sein de la chambre de combustion (8),
**caractérisé en ce que**
la surface inclinée côté admission (34) et la surface inclinée côté échappement (35) sont formées de telle sorte qu'un angle (θ2) défini par un plan orthogonal à un axe central (2a) du cylindre (2) et la surface inclinée côté échappement (35) est inférieur à un angle (θ4) défini par le plan orthogonal et la surface inférieure de tête de soupape (21c) de la soupape d'échappement (21), et une différence d'angle d'inclinaison (θ4-θ2) entre la surface inclinée côté échappement (35) et
la surface inférieure de tête de soupape (21c) de la soupape d'échappement (21) est supérieure à une différence d'angle d'inclinaison (θ3-θ1) entre la surface inclinée côté admission (34) et la surface inférieure de tête de soupape (20c) de la soupape d'admission (20) de 3 degrés ou plus, et
un retrait de soupape d'échappement encastré vers le bas (35a) est formé dans la surface inclinée côté échappement (35) à une position associée à la soupape d'échappement (21) de telle sorte qu'une surface inférieure du retrait de soupape d'échappement (35a) est parallèle à la surface inférieure de tête de soupape (21c) de la soupape d'échappement (21).

2. Moteur à combustion interne à allumage par étincelle selon la revendication 1, dans lequel
la surface inclinée côté admission (34) et la surface inclinée côté échappement (35) sont formées de telle sorte qu'un angle d'inclinaison (θ2) de la surface inclinée côté échappement (35) est inférieur à un angle d'inclinaison (θ1) de la surface inclinée côté admission (34).

3. Moteur à combustion interne à allumage par étincelle selon la revendication 1 ou 2, dans lequel
un rapport de compression géométrique du cylindre (2) est de 12 ou supérieur.
